# DEMANDE DE BREVET EUROPEEN

(11) **EP 1 005 134 A1**
(43) Date de publication de la demande: **31.05.2000**
(21) Numéro de dépôt: 99402769.6
(22) Date de dépôt: 08.11.1999
(51) Int. Cl.: H02J 13/00

(54) **Commande pour appareils électriques**

(30) Priorité: 24.11.1998 FR 9814769
(71) Demandeur: LEGRAND, F-87000 Limoges (FR); LEGRAND SNC, F-87000 Limoges (FR)
(72) Inventeur: Leblanc, Didier, 87100 Limoges (FR)
(74) Mandataire: CABINET BONNET-THIRION

(57) **Abrégé**

Système de transmission de commandes émises sur des lignes de commandes différentes à plusieurs appareils électriques pilotés par des récepteurs, caractérisé en ce que chaque ligne de commande comporte un moyen de modifier la forme du signal électrique de façon spécifique à cette ligne de commande, et en ce que chaque récepteur comporte un moyen de lecture de la forme du signal électrique, et un moyen de commande de l'appareil électrique qu'il pilote, selon la forme de signal électrique reçu.

## Description

L'invention est du domaine des dispositifs de commande d'appareils électriques.

Lorsque des appareils électriques peuvent recevoir plusieurs types de commandes différentes, telles que par exemple allumage de lampes, extinction, test de ces lampes, il peut être souhaitable de disposer de plusieurs boutons de commandes indépendants, correspondant à certaines de ces fonctions et que les récepteurs associés aux appareils électriques commandés soient en mesure de reconnaître l'origine de la commande, et de ce fait la nature de la commande qui leur est adressée.

La présente invention a donc pour but de fournir une solution au problème précité.

Elle propose à cet effet un système de transmission de commandes émises sur des lignes de commandes différentes à plusieurs appareils électriques pilotés par des récepteurs, caractérisé en ce que chaque ligne de commande comporte un moyen de modifier la forme du signal électrique de façon spécifique à cette ligne de commande, et en ce que chaque récepteur comporte un moyen de lecture de la forme du signal électrique, et un moyen de commande de l'appareil électrique qu'il pilote, selon la forme de signal électrique reçu.

Il s'agit alors de créer une signature de l'origine du signal de commande, par une perturbation dudit signal, que le récepteur est en mesure de détecter et d'interpréter.

Selon une mise en oeuvre préférée, le moyen de modifier la forme du signal électrique de façon spécifique à cette ligne de commande, est un moyen adapté à émettre, à chaque demi-période de signal réseau, une impulsion de longueur spécifique à cette ligne de commande.

De façon plus spécifique, le moyen adapté à émettre une impulsion de longueur spécifique à une ligne de commande comporte une diode Zener de valeur spécifique à cette ligne de commande.

On comprend dans l'exposé précédent qu'on a réalisé un système de commande d'un dispositif de réception par un ensemble de boutons de commandes (ayant éventuellement des fonctions différentes), tel que chaque ligne de commande comporte une diode Zener de valeur différente de toutes les autres diodes Zener des autres lignes de commandes, et que le dispositif de réception comporte un moyen de lecture de la longueur d'impulsion reçue, chaque longueur étant spécifique d'une diode Zener particulière.

Les diodes Zener sont usuellement utilisées pour créer une référence de tension, avec une application typique aux comparateurs, pour réguler un tension, ou pour limiter une tension, pour la protection de composants électroniques. Ici, au contraire, au lieu d'utiliser une mesure d'amplitude d'impulsion comme c'est le cas dans les applications précédemment citées, on utilise une mesure de longueur d'impulsion crée par une diode Zener. En différenciant chaque bouton de commande par une diode Zener de longueur d'impulsion différente, il est possible de créer une signature de chaque bouton, que le dispositif de réception peut très aisément lire. Des fonctions différentes commandées par les différents boutons sont alors détectées et exécutées.

La valeur des diodes Zener est alors choisie sensiblement dans la plage de valeurs 180-240 Volts.

L'utilisation de diodes Zener est favorable à une réalisation économique du dispositif.

Dans une variante non préférée, les commandes sont émises par des boutons de commande comportant chacun une diode Zener de valeur spécifique à cette commande.

Dans une autre variante de mise en oeuvre, les moyens de modifier la forme du signal électrique de façon spécifique à chaque ligne de commande sont regroupés au sein d'un interface de commande générale.

L'invention vise aussi un récepteur comportant un optocoupleur relié à un microcontrôleur destiné à piloter un appareil électrique, caractérisé en ce qu'il comporte également sur chaque ligne de commande entrante une diode Zener de valeur différente pour chaque ligne de commande, disposée en amont de l'optocoupleur.

Préférentiellement dans ce récepteur, le microcontrôleur comporte des moyens adaptés à comparer une impulsion de commande reçue, à une liste, préalablement mémorisée, d'actions à exécuter selon la longueur de l'impulsion reçue.

L'invention vise également un bouton de commande caractérisé en ce que il comporte une diode Zener.

La description et les dessins d'un mode préféré de réalisation de l'invention, donnés ci-après, permettront de mieux comprendre les buts et avantages de l'invention. Il est clair que cette description est donnée à titre d'exemple, et n'a pas de caractère limitatif. Dans les dessins :
- la figure 1 est un schéma électrique simplifié d'une commande à plusieurs états pour appareils sur réseau triphasé;
- la figure 2 montre la tension réseau et le signal issu de l'opto-coupleur, selon la valeur de diode Zener choisie;
- la figure 3 illustre un montage préféré du système de commande de plusieurs appareils électriques par plusieurs commandes;
- la figure 4 illustre une première variante de ce système de commande;
- la figure 5 illustre une seconde variante de ce même système.

La fonction du système est une commande à plusieurs entrées (deux entrées dans le cas décrit ici, également appelées plus loin lignes de commande), capable de piloter plusieurs appareils électriques alimentés sur des phases différentes (typiquement sur un réseau triphasé).

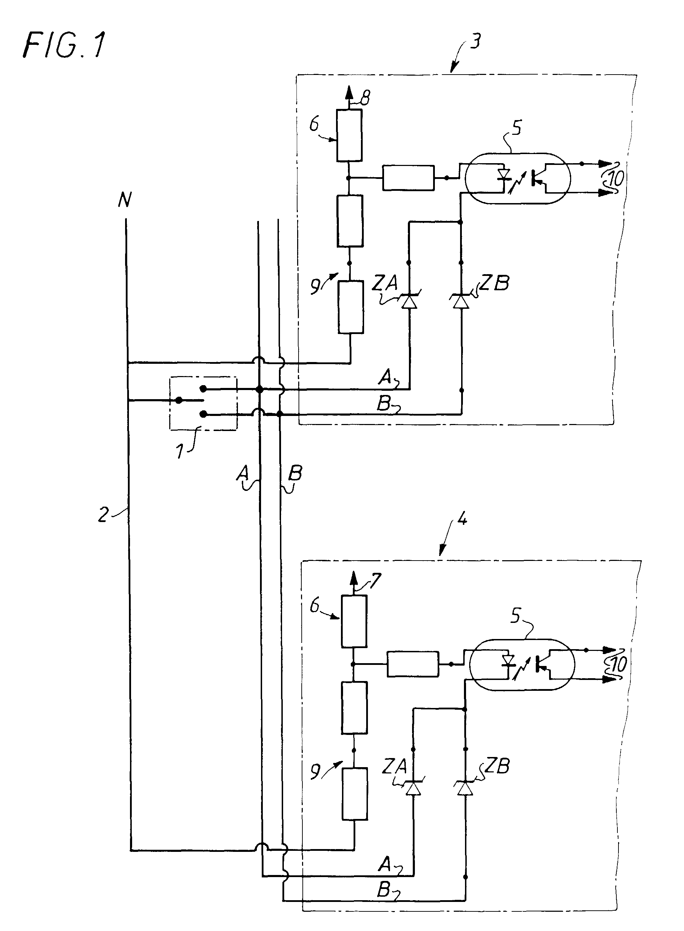

La figure 1 montre un bouton 1 susceptible d'activer sélectivement deux lignes de commande A, B, et relié par son autre borne au neutre 2. Dans le cas où on utilise plusieurs boutons (par exemple de type bouton poussoir), ceux-ci ont un point commun de commande référencé au neutre 2.

Chaque ligne de commande A, B est distribuée vers des récepteurs 3, 4 pilotant des appareils électriques à commander (non représentés).

Au sein de chaque récepteur 3, 4 les deux lignes de commande A, B comportent chacune une diode Zener ZA, ZB de tension élevée (entre 180 et 240 V typiquement). Sur chaque ligne de commande A (resp. B), toutes les diodes Zener ZA (resp. ZB) sont de même valeur alors que d'une ligne de commande à l'autre, les valeurs de diodes sont toutes différentes, de sorte que la valeur d'une diode Zener ZA (ZB) est caractéristique de la ligne de commande A (B) qui la porte.

Toutes les diodes Zener ZA, ZB d'un récepteur 3 (resp. 4) sont reliées à un optocoupleur 5, dont l'autre borne est reliée par un premier pont de résistances 6 à une phase 7 (resp. 8) d'alimentation du récepteur, et par un second pont de résistances 9 au neutre 2.

Les optocoupleurs 5 permettent d'isoler les appareils électrique commandés entre eux et de transmettre l'information de commande reçue du bouton 1 au coeur de chaque appareil commandé. Chaque optocoupleur 5 émet un signal de tension continue, selon le signal alternatif reçu de la ligne de commande, vers un microcontrôleur 10 (non représenté sur la figure 1) qui pilote l'appareil électrique commandé.

Le premier pont de résistances 6 relié à la phase 7, 8 limite le courant dans la diode de l'optocoupleur 5.

Le second pont de résistance 9 relié au neutre 2 limite la tension inverse aux bornes de la diode de l'optocoupleur 5, pour éviter à celle-ci de claquer. Les valeurs de ces ponts de résistances 6, 9, ainsi que le choix des composants tels que optocoupleurs, microcontrôleurs etc. cités dans cette description, sont classiques pour l'homme de l'art.

En fonctionnement, lorsque le bouton 1 (figure 1) est inactif, les diodes optocoupleur 5 bloquent, il n'y a pas de signal envoyé aux microcontrôleurs 10.

Lorsque le bouton est sur la position A, le courant circule dans la diode de l'optocoupleur 5 via le pont de résistances 6, 9 et la diode Zener ZA des phases 7, 8. Lorsque le boutons est sur la position B, la situation est la même pour la diode Zener ZB.

Le moyen permettant la distinction entre les deux commandes A, B est l'utilisation des diodes Zener ZA, ZB de valeurs différentes sur les deux commandes (voies) A, B, par exemple B : 240 V, et A : 180 V. On comprend qu'il est favorable d'utiliser des Zener de valeur élevée, plutôt que de valeur proche de zéro, dans la mesure où la pente de la sinusoïde est moins accentuée en sommet de sinusoïde que près de zéro, et où on discrimine donc mieux deux impulsions provenant de deux diodes Zener différentes dans ce cas.

La diode Zener ZA (ZB) d'une ligne de commande A (B) donnée (de valeur différente pour chaque ligne), permet de distinguer la ligne A (B) activée. Sa mise en conduction intervient quand la tension secteur est supérieure ou égale à sa valeur. Elle est donc plus ou moins tardive en fonction de cette valeur. La durée de polarisation de chaque diode dépend donc directement de sa valeur (exprimée en volts).

L'optocoupleur 5 traduit alors cette conduction d'un signal alternatif par un créneau de signal (en tension continue), plus ou moins long selon la valeur de la diode Zener ZA (ZB) et donc identifiable.

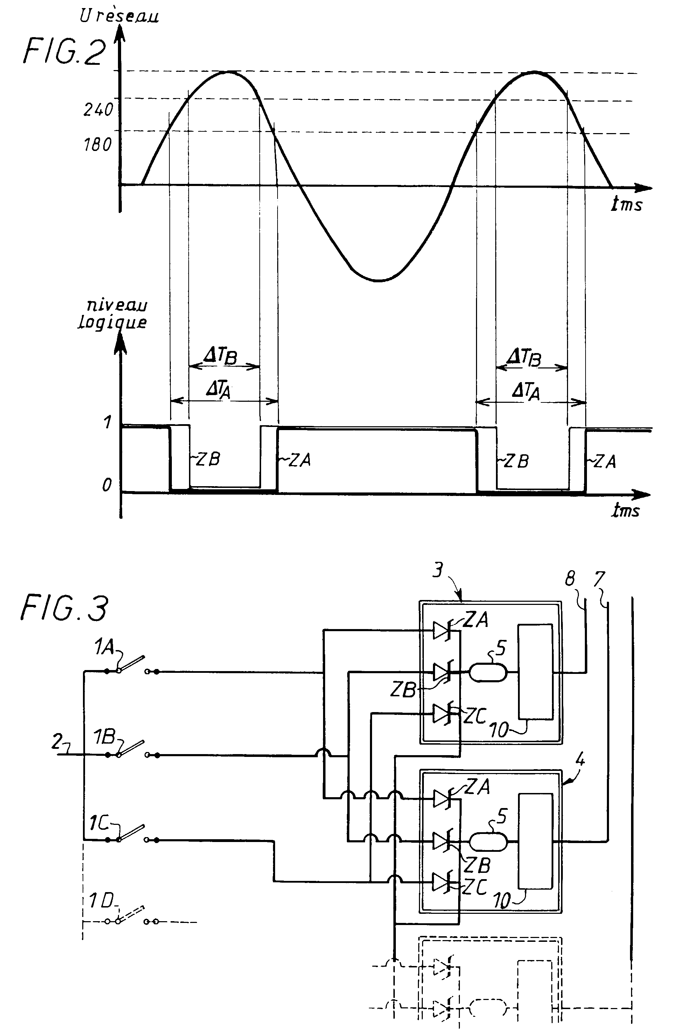

Dans ce cas, la sortie de l'optocoupleur 5 fournit un signal d'amplitude prédéterminée, et de longueur fonction de la valeur de la diode Zener ZA (ZB). Dans le cas présenté sur la figure 2, la diode ZB de valeur 240 V entraîne la création d'une impulsion de longueur ATB plus courte que celle ATA qui est créé par la diode ZA de valeur 180 V.

Dans un récepteur donné 3 (4), le microcontrôleur 10 reçoit de l'optocoupleur 5 des impulsions continues, mesure la longueur ΔTA, ΔTB de chaque impulsion reçue, et en déduit si l'impulsion provient du bouton de commande 1 sur la position A ou B, selon que la longueur de l'impulsion en sortie de diode est longue ou courte respectivement.

La figure 3 illustre alors un mode de réalisation préféré, dans lequel plusieurs boutons de commandes 1A, 1B, 1C, 1D susceptibles d'activer une ligne de commande chacun (type bouton poussoir par exemple), sont reliés à plusieurs récepteurs 3, 4, etc. pilotant des appareils électriques différents reliés à des phases différentes 7, 8, etc.

Dans ce cas, chaque récepteur étant conforme à la description précédente, l'appui sur un bouton de commande 1 B entraînera l'envoi vers chaque microcontrôleur 10 d'une impulsion de longueur ΔTB. Chaque microcontrôleur 10, selon sa programmation interne, en déduira par comparaison avec une liste, préalablement mémorisée, d'actions à exécuter selon la longueur d'impulsion reçue, d'une part, si la commande le concerne, et, d'autre part, la nature de l'ordre à transmettre éventuellement à l'appareil électrique qu'il pilote (allumage, extinction, test...).

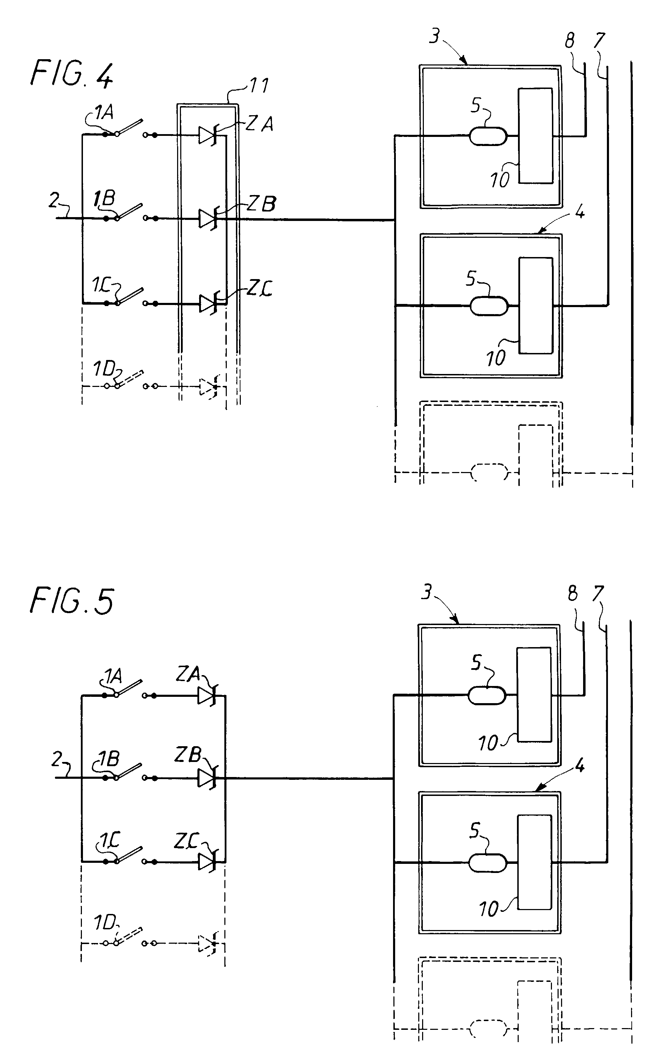

Une variante illustrée en figure 4 consiste à regrouper toutes les diodes Zener ZA, ZB, ZC des lignes de commandes A, B, C, au sein d'un seul interface de commande générale 11. Dans encore une autre variante, chaque boîtier de bouton 1A, 1B, 1C, comporte une diode Zener ZA, ZB, ZC qui caractérise la ligne de commande.

Dans le dispositif décrit, on a utilisé des diodes Zener de valeur différente pour créer une signature sur le courant sinusoïdal, sous la forme d'une perturbation de ce signal. En variante, il est possible de remplacer les diodes Zener par des polymères conducteurs, ou par des résistances à coefficients de température positif, le critère de choix étant alors le prix des composants utilisés.

Dans une variante de mise en oeuvre du dispositif, le signal émis par chaque bouton de commande peut comporter un message indépendamment de la "signature" de provenance donnée par la diode Zener. Par exemple, le signal peut comporter un appui long ou un appui court sur un bouton, et dans ce cas, le microcontrôleur extraira du signal reçu, d'une part, la provenance de la commande, et, d'autre part, la nature de la commande à exécuter. Plus généralement, il est possible d'appliquer le même principe de signature par diode Zener à des signaux différenciés par leur durée, leur fréquence ou leur amplitude. On comprend cependant qu'une limitation d'application provient alors de la durée minimale du signal, qui doit être supérieure à la longueur d'une impulsion en sortie de diode Zener, faute de quoi la signature par diode Zener n'est plus détectable.

La portée de la présente invention ne se limite pas aux détails des formes de réalisation ci-dessus considérées à titre d'exemple, mais s'étend au contraire aux modifications à la portée de l'homme de l'art.

## Revendications

1. Système de transmission de commandes émises sous forme de signaux électriques sur des lignes de commandes différentes (A, B, C) à plusieurs appareils électriques pilotés par des récepteurs (3, 4), chaque ligne de commande (A, B, C) comportant un moyen (ZA, ZB, ZC) de modifier la forme du signal électrique de façon spécifique à cette ligne de commande, chaque récepteur (3, 4) comportant un moyen (5, 10) de lecture de la forme du signal électrique, et un moyen de commande (10) de l'appareil électrique qu'il pilote, selon la forme de signal électrique reçu,
caractérisé en ce que le moyen (ZA, ZB, ZC) de modifier la forme du signal électrique de façon spécifique à cette ligne de commande, est un moyen adapté à émettre, à chaque demi-période de signal réseau, une impulsion de longueur spécifique à cette ligne de commande.

2. Système selon la revendication 1, caractérisé en ce que le moyen adapté à émettre une impulsion de longueur spécifique à une ligne de commande comporte une diode Zener (ZA, ZB, ZC) de valeur spécifique à cette ligne de commande (A, B, C), disposé sur cette ligne en amont des récepteurs (3, 4).

3. Système selon la revendication 2, caractérisé en ce que la valeur des diodes Zener (ZA, ZB, ZC) est choisie sensiblement dans la plage de valeurs 180-240 Volts.

4. Système selon l'une quelconque des revendications 1 à 3, caractérisé en ce que chaque récepteur (3, 4) comporte un optocoupleur (5) et un microcontrôleur (10) pilotant l'appareil électrique relié audit récepteur.

5. Système selon la revendication 1, caractérisé en ce que les commandes sont émises par des boutons de commande 1A, 1B, 1C comportant chacun une diode Zener ZA, ZB, ZC de valeur spécifique à cette commande.

6. Système selon la revendication 1, caractérisé en ce que les moyens (ZA, ZB, ZC) de modifier la forme du signal électrique de façon spécifique à chaque ligne de commande (A, B, C) sont regroupés au sein d'un interface de commande générale (11).

7. Récepteur (3, 4) pour système de transmission de commandes émises sur des lignes de commandes différentes (A, B, C) à plusieurs appareils électriques pilotés par ces récepteurs (3, 4), ledit récepteur comportant un optocoupleur (5) relié à un microcontrôleur (10) pilotant un appareil électrique, caractérisé en ce qu'il comporte également sur chaque ligne de commande entrante (A, B) une diode Zener (ZA, ZB) de valeur différente pour chaque ligne de commande, disposée en amont de l'optocoupleur (5), chaque diode Zener (ZA, ZB) étant apte à marquer d'une signature la commande de chaque ligne en modifiant la forme du signal électrique sur les lignes de commande (A, B) de façon spécifique à chaque ligne de commande.

8. Récepteur selon la revendication 7, caractérisé en ce que la signature consiste en une impulsion de longueur spécifique à chaque ligne de commande émise à chaque demi-période du signal électrique.

9. Récepteur (3, 4), selon l'une quelconque des revendications 7 à 8, caractérisé en ce que le microcontrôleur (10) comporte des moyens adaptés à comparer une impulsion de commande reçue, à une liste, préalablement mémorisée, d'actions à exécuter selon la longueur de l'impulsion reçue.

10. Bouton de commande 1A, 1B, 1C pour système selon l'une quelconque des revendications 1 à 6, caractérisé en ce que il comporte une diode Zener ZA, ZB, ZC.
